# EUROPEAN PATENT APPLICATION

(11) **EP 3 620 129 A1**
(43) Date of publication of application: **11.03.2020**
(21) Application number: 19711230.3
(22) Date of filing: 20.02.2019
(51) Int. Cl.: A61C 5/00, A61C 7/20

(54) **DENTAL RETAINER FOR MAINTAINING TEETH ARRANGEMENT OF WEARER**

(30) Priority: 04.07.2018 KR 20180077918
(71) Applicant: Park, Jin Sung, Jinju-si Gyeongsangnam-do 52696 (KR); Jang, Ic Joon, Gunpo-si Gyeonggi-do 15869 (KR)
(72) Inventor: Park, Jin Sung, Jinju-si Gyeongsangnam-do 52696 (KR); Jang, Ic Joon, Gunpo-si Gyeonggi-do 15869 (KR)
(74) Representative: Ter Meer Steinmeister & Partner
(86) International application number: PCT/KR2019/002016
(87) International publication number: WO 2020/009307

(57) **Abstract**

There is provided a retainer for maintaining an alignment of a first tooth and a second tooth adjacent to the first tooth. The retainer is configured in a form of a metal wire. The retainer includes: a first contact portion coming into contact with at least a part of a surface of the first tooth; a second contact portion coming into contact with at least a part of a surface of the second tooth; and a spaced portion. The spaced portion extends from the first and second contact portions, is located between the first and second contact portions, and is spaced from the first and second teeth. The spaced portion is located between an embrasure configured between the first and second teeth and an interdental space existing between the first and second teeth, and at least one edge of the spaced portion is a parabola having a small curvature.

## Description

### TECHNICAL FIELD

The present invention relates to a retainer and, more particularly, to a retainer for maintaining teeth alignment of a wearer.

### BACKGROUND ART

A maintainer is a device which is generally intended to maintain teeth alignment (position or dentition) of a wearer. Teeth alignment of a wearer wearing the maintainer is retained by the maintainer, and thus changing of the teeth alignment of the wearer is inhibited.

In particular, a maintainer to be worn by a patient who has undergone orthodontic treatment to maintain realigned teeth is called a retainer. Wearing the retainer inhibits positions of the realigned teeth from changing.

A conventional maintainer (hereinafter, referred to as retainer) is bonded along surfaces of the teeth of the wearer to maintain the teeth alignment of the wearer. Thus, the surfaces of the teeth are kept very close to the retainer. As a result, a space for hygiene between the retainer, an interdental space (interdental papilla), and an embrasure of the wearer and (for example, a space for using dental floss or an interdental brush) is not ensured, which makes it difficult to maintain the dental health of the wearer.

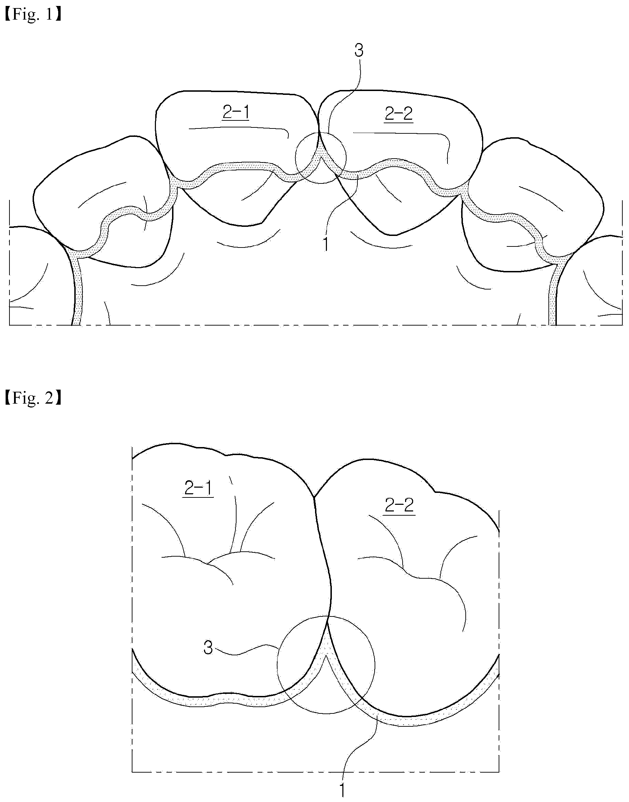

Figs. 1 and 2 conceptually illustrate a conventional retainer. Referring to Figs. 1 and 2, a retainer 1 is worn and engaged with teeth 2-1 and 2-2 of a wearer to come into contact with the teeth. Particularly, the retainer 1 protrudes toward or is inserted into a space (i.e., embrasure 3) between adjacent teeth 2-1 and 2-2, and keeps teeth alignment.

The conventional retainer 1 is designed to come into contact with the space between the adjacent teeth 2-1 and 2-2 as much as possible in order to keep the teeth alignment more securely. As a result, as illustrated in Fig. 2, no space can be secured between the retainer 1 and the teeth.

Accordingly, food remains between the teeth, in particular, between the adjacent teeth 2-1 and 2-2 and the retainer 1, and saliva can not easily flow therebetween whereby cleaning therebetween by saliva is impossible. In addition, as the wearer cannot use tools such as dental floss and an interdental brush for cleaning the space between the adjacent teeth 2-1 and 2-2, it is difficult to carry out dental hygiene for the wearer and cost for carrying out dental hygiene is increased.

### DISCLOSURE

### TECHNICAL PROBELM

The present invention is intended to provide a retainer for maintaining teeth alignment of a wearer. More particularly, the present invention is intended to provide a retainer for maintaining teeth alignment, the retainer maintaining teeth alignment of a wearer and securing a space for maintaining dental health of the wearer.

### TECHNICAL SOLUTION

In order to achieve the above object, according to one aspect of the present invention, there is provided a retainer being made of a metal to maintain teeth alignment. The retainer includes: a contact portion coming into contact with at least a part of a surface of a first tooth of the teeth; and a spaced portion extending from the contact portion and being spaced from the teeth. The spaced portion is located between a space configured between the first tooth and a second tooth adjacent to the first tooth while locating on or above gum existing between the first tooth and the second tooth. At least one edge of the spaced portion is a parabola having a small curvature.

### ADVANTAGEOUS EFFECTS

According to an embodiment of the present invention, a retainer includes not only a contact portion that is in contact with a tooth but also a spaced portion that is not in contact with a tooth. By adjusting a shape of the spaced portion, a space between the spaced portion and teeth adjacent to the spaced portion is intentionally secured. Accordingly, a sanitary tool (e.g., dental floss or an interdental brush) can pass the secured space, thereby improving a dental hygiene state of a wearer wearing the retainer.

According to an embodiment of the present invention, a retainer can be brought into contact with the teeth in a line contact manner rather than a surface contact manner whereby chemical and mechanical adhesive force between the retainer, the tooth, and an adhesive can be enhanced.

**BRIEF DESCRIPTION OF DRAWINGS**Figs. 1 and 2 conceptually illustrate a conventional retainer.
Fig. 3 conceptually illustrates a retainer according to an embodiment of the present invention.
Fig. 4 illustrates a structure of a retainer according to an embodiment of the present invention.
Fig. 5 conceptually illustrates a three-dimensional structure of a retainer according to an embodiment of the present invention.
Fig. 6 conceptually illustrates a cross-section of a retainer according to an embodiment of the present invention and a tooth being contact with the retainer.
Figs. 7 to 10 conceptually illustrate a retainer according to an embodiment of the present invention.

### MODE FOR INVENTION

Hereinafter, embodiments of the present invention will be described in detail with reference to the accompanying drawings.

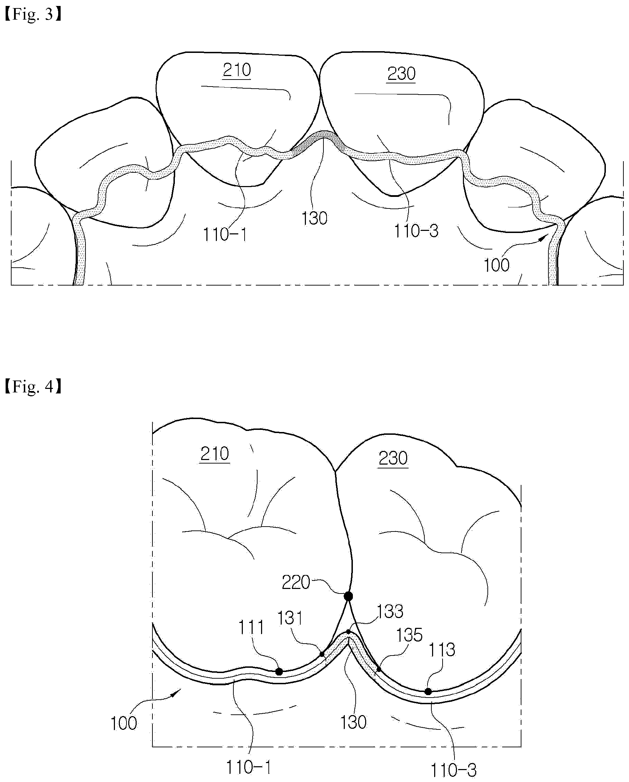

Fig. 3 conceptually illustrates a retainer according to an embodiment of the present invention. Referring to Fig. 3, a retainer 100 according to an embodiment of the present invention may be attached to (or mounted on) teeth of a wearer to maintain teeth alignment of the wearer. Hereinafter, it is assumed that the retainer 100 is attached to two teeth 210 and 230 for convenience of explanation.

Although the retainer 100 is illustrated in Fig. 3 as attached to a lingual surface of the teeth, embodiments of the present invention are not limited thereto. For example, the retainer 100 may be attached to a labial surface of the teeth.

The retainer 100 may be composed of a dental material such as metal, resin, and zirconia, but the material which make up the retainer 100 is not limited to the above-mentioned materials. According to an embodiment, the retainer 100 may be configured to be in a form of a metal wire having a predetermined thickness, but not limited thereto. The thickness of the retainer 100 may be predetermined according to an individual dentition (e.g., occlusion).

For example, the retainer 100 may be implemented in a form of a metal wire having a quadrangular cross section. However, it is not limited thereto and the cross section of the retainer 100 may be polygonal or circular.

The retainer 100 includes a first contact portion 110-1, a second contact portion 110-3, and a spaced portion 130. The first contact portion 110-1 and the spaced portion 130 may be connected to each other, and the spaced portion 130 and the second contact portion 110-3 may be connected to each other. In other words, the spaced portion 130 may extend from the first contact portion 110-1, and the second contact portion 110-3 may extend from the spaced portion 130. The first contact portion 110-1 and the second contact portion 110-3 are differentiated (or separated) by the spaced portion 130.

Although the retainer 100 illustrated of Fig. 3 includes two contact portions 110-1 and 110-3 and one spaced portion 130, the number of contact portions and spaced portions may vary depending on the number of teeth to which the retainer 100 is attached.

The first contact portion 110-1 and the second contact portion 110-3 may come into contact with at least a portion of surfaces of the teeth 210 and 230 along the surfaces of the teeth 210 and 230. That is, the contact portions 110-1 and 110-3 (collectively, 110) may refer to a portion of the retainer 100 that is positioned between adjacent two teeth (e.g., the teeth 210 and 230) in contact with the two teeth.

Hereinafter, the first contact portion 110-1 and the second contact portion 110-3 are collectively referred to as a contact portion 110.

According to an embodiment, a curvature of the contact portion 110 may be substantially identical to a curvature of the surfaces of the teeth with which the contact portion 110 comes into contact.

The spaced portion 130 extends from the first contact portion 110-1 and the second contact portion 110-3. The spaced portion 130 is interposed between the first contact portion 110-1 and the second contact portion 110-3. The contact portion 110 and the spaced portion 130 are alternately arranged to constitute the retainer 100.

The spaced portion 130 is spaced apart from the teeth and not in contact with the teeth. According to an embodiment, the spaced portion 130 may refer to a portion of the retainer 100 positioned between two adjacent teeth (e.g., teeth 210 and 230) not in contact with the two teeth. Accordingly, when the retainer 100 is worn, the contact portion 110 and the spaced portion 130 are differentiated from each other according to whether being in contact with the teeth.

The spaced portion 130 may be positioned between two adjacent teeth (e.g., 210 and 230). According to an embodiment, the spaced portion 130 is provided between a space which is between the two adjacent teeth 210 and 230 (e.g. embrasure), and gum positioned between the two adjacent teeth 210 and 230 (e.g., interdental space). For example, at least a portion of the spaced portion 130 may protrude toward or be inserted into the embrasure and be located on or above the interdental space.

As described later, a space for dental hygiene may be provided (or designed) between the spaced portion 130, the embrasure, and the interdental space according to the intention of the manufacturer of the retainer 100. For example, a space (hereinafter referred to as a hygienic space) where a tool for dental hygiene of the wearer of the retainer 100 can pass through is intentionally configured between the spaced portion 130, the embrasure, and the interdental space.

Since shapes of the embrasure and the interdental space vary by the wearer of the retainer 100, it is necessary that a shape (relative to the wearer) of the spaced portion 130 is designed in order to configure the hygienic space.

The spaced portion 130 may have a parabolic form having a smooth curvature, for example, a smooth curvature on a local portion. For example, when the retainer 100 is made of a metal wire, at least one edge of the spaced portion 130 may be a parabola with a smooth curvature.

Cylinders do not have edges mathematically. However, in this specification, for convenience of explanation, when the retainer 100 is configured in the form of a metal wire having a circular cross section (i.e., a cylindrical form), an edge of the retainer 100 refers to a line segment that is positioned on a surface of the retainer 100 and is perpendicular to the cross section of the retainer 100. Or an edge of the retainer 100 refers to a line segment that is positioned on the surface of the retainer 100 and parallel to a line (i.e., a centerline) that passes through the center of the cross section of the retainer 100. Accordingly, when the retainer 100 is configured into the form of a metal wire having a circular cross section, the number of edges of the retainer 100 is infinite.

The smooth curvature used herein refers to a curvature having a finite value or a curvature in a differentiable curve. For example, a curvature of the spaced portion 130 may be a positive real number or a negative real number. That is, a shape of the spaced portion 130 does not have a non-differentiable point (e.g., a sharp point).

That is, in contrast to a conventional retainer (e.g., the retainer 1 of Fig. 1), the retainer 100 according to an embodiment of the present invention includes a spaced portion 130 that is intentionally configured to be spaced from the teeth. A function and a structure of the spaced portion 130 will be described in detail with reference to Fig. 4.

Fig. 4 illustrates a structure of a retainer according to an embodiment of the present invention. With reference to FIGS. 3 and 4, detailed positions of multiple points 111, 113, 131, 133, 135, and 220 are illustrated in Fig. 4. According to an embodiment, the points 111, 113, 131, 133, and 135 may be located on one plane or one edge. For example, when the retainer 100 is embodied in the form of a metal wire, the points 111, 113, 131, 133, and 135 may be points positioned on edges of the retainer 100, the edges (hereinafter, referred to as contact edges) coming into contact with the teeth 210.

However, an arrangement of the points 111, 113, 131, 133, 135 and 220 is to be defined as described herein and is not limited to the alignment illustrated in Fig. 4. In other words, each of the points 111, 113, 131, 133, 135 and 220 may be positioned on different planes, and at least two of the points 111, 113, 131, 133, 135, and 220 may be positioned on a same plane or a same edge.

First points 111 and 113 may be points positioned on contact edges of the retainer 100 coming into contact with the teeth 210 and 230, and may be positioned on the contact portion 110. The first points 111 and 113 may be extreme points of the contact edges. Thus, signs of tangents of the contact edge change with respect to the first points 111 and 113.

The points 131, 133, and 135 may be points positioned on contact edges of the retainer 100 coming into contact with the teeth 210 and 230, and may be positioned on the spaced portion 130. According to an embodiment, second points 131 and 135 may be positioned at opposite ends of the spaced portion 130. In other words, second points 131 and 135 may points at which the retainer 100 begins to be spaced apart from teeth (e.g., the teeth 210 and 230) to which the retainer 100 is attached.

The second points 131 and 135 may be practically shared by the contact portion 110 and the spaced portion 130 since the curve of the retainer 100 is continuous. For example, whether the retainer 100 is in contact with the teeth 210 and 230 may be varied with respect to the point 131 (or the point 135). That is, the first contact portion 110-1 and the spaced portion 130 are differentiated by the point 131. In the same way, the second contact portion 110-3 and the spaced portion 130 are differentiated by the point 135.

A closest point 133 may refer to a point positioned on the spaced portion 130 that is the closest to a contact point 220, which will be described below, of the two adjacent teeth 210 and 230. That is, when the contact point 220 is determined, the closest point 133 is determined accordingly.

The contact point 220 may be one on the retainer 100 side, of points on a contact line or a contact surface of the two teeth 210 and 230. When the retainer 100 is provided on a labial surface of the teeth, the contact point 220 may be a point on the labial surface side of the points on the contact surface of the two teeth 210 and 230. In the same way, when the retainer 100 is provided on a lingual surface of the teeth, the contact point 220 may be a point on the lingual surface side of the points on the contact surface of the two teeth 210 and 230. For example, of the points on the contact line between the teeth 210 and 230, the contact point 220 may be a point closest to a contact edge between the retainer 100 and the teeth 210 and 230.

According to an embodiment, in order to design the hygienic space to be suitable for the wearer wearing the retainer 100, a relative shape (e.g., a length of a portion of the contact edge that belongs to the spaced portion 130, a curvature of the spaced portion 130, and a shortest distance between the contact portion 130 and the contact point 220) of the spaced portion 130 with respect to the retainer 100 may be determined based on a dentition (shape of teeth or oral) of the wearer.

A dentition of the wearer includes: at least one of a height of an occlusion between maxillary and mandibular teeth, a symmetry of a first tooth 210 and a second tooth 230, each size of the first tooth 210 and the second tooth 230, a size of the contact surface between the first tooth 210 and the second tooth 230, a shape of the interdental space between the first tooth 210 and the second tooth 230, and a shape of the embrasure of the first tooth 210 and the second tooth 230.
(1) According to an embodiment, of the contact edges with the teeth 210 and 230, the length of the portion of the retainer 100 that belongs to the spaced portion 130 may be defined as a distance between the second points 131 and 135 on the contact edge. The defined distance may be determined based on a dentition of a wearer in order to design a hygienic space to be suitable for the wearer wearing the retainer 100. For example, in the case of a wearer requiring a large hygienic space, a distance between the second points 131 and 135 on the contact edge can be designed to be short.
(2) According to an embodiment, relative positions of the second points 131 and 135 with respect to the contact point 220 may be determined based on a dentition of a wearer. That is, the relative positions at which the retainer 100 coming into contact with the teeth 210 and 230 starts to be spaced therefrom may be determined based on a dentition of a wearer. For example, in the case of a wearer requiring a large hygienic space, the positions of the second points 131 and 135 may be designed to be away from the contact point 220.
(3) According to an embodiment, when assuming a distance between a first point 111 and the second point 131 on the contact edge is L1 and a distance between the second point 131 and the contact point 220 is L2, a ratio of L1/L2 may be determined based on a dentition of a wearer. That is, the relative positions at which the retainer 100 coming into contact with the teeth 210 and 230 starts to be spaced therefrom may be determined based on a dentition of a wearer. For example, in the case of a wearer requiring a large hygienic space, the ratio L1/L2 may be designed to be small.
(4) According to an embodiment, a distance between a closest point 133 and the contact point 220 may be determined based on a dentition of a wearer. That is, the shortest distance between the spaced portion 130 and the contact point 220 may be determined based on a dentition of a wearer. For example, in the case of a wearer requiring a large hygienic space, the distance between the closest point 133 and the contact point 220 may be designed to be large.

For example, the distance between the closest point 133 and the contact point 220 may be designed such that a sanitary tool (e.g., dental floss or an interdental brush) passes easily. According to an embodiment, a length of the distance may be at least 0.05 mm, preferably at least 0.07 mm, and more preferably at least 0.1 mm. In addition, according to an embodiment, the length of the distance may be at most 1.5 mm, but not limited thereto. Accordingly, there is an effect that a space (i.e., a hygienic space) between the retainer 100 (or the spaced portion 130) and the teeth 210 and 230 can be intentionally secured.

A primary purpose of a conventional retainer (e.g., the retainer illustrated in FIGS. 1 and 2) is to maximally come into contact with a tooth surface to strengthen a force to be retained on the tooth surface. However, the retainer 100 according to an embodiment of the present invention is intended to maintain the retaining force and secure the space between the retainer 100 and corresponding teeth, i.e., the hygienic space between the retainer 100 and the two teeth 210 and 230 adjacent to the spaced portion 130. Accordingly, when wearing the retainer 100 according to an embodiment of the present invention, the hygienic space between the retainer 100 and the teeth, i.e., the hygienic space between the retainer 100 and the two teeth 210 and 230 adjacent to the spaced portion 130 is secured. In addition, since a sanitary tool (e.g., dental floss and an interdental brush) can pass the secured space, not only the teeth alignment of the wearer wearing the retainer 100 is maintained, but also the dental hygiene of the wearer is improved.

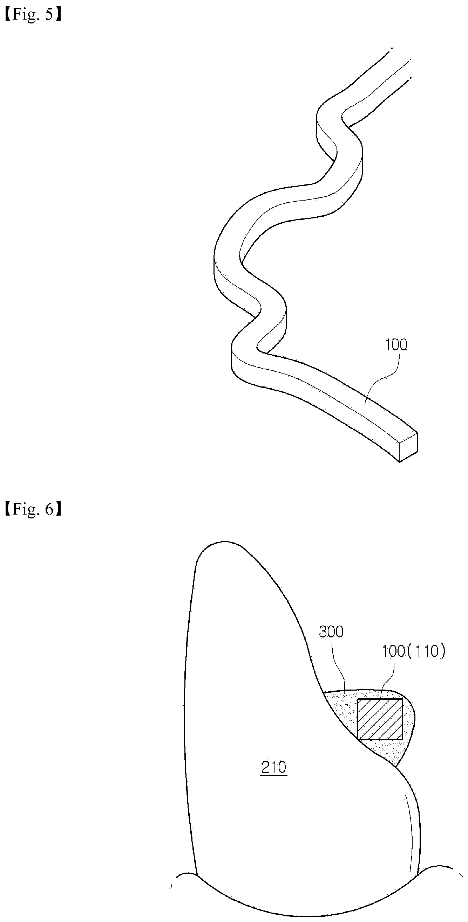

Fig. 5 conceptually illustrates a three-dimensional structure of a retainer according to an embodiment of the present invention. Referring to Figs. 3 to 5, the retainer 100 may be configured in the form of a metal wire having a predetermined thickness. In addition, as described above, the retainer 100 may be configured in the form of a metal wire having a polygonal or circular cross section. For the sake of explanation, it is assumed that the retainer 100 has a quadrangular cross section.

According to an embodiment, the retainer 100 may be manufactured (e.g., using a metal sheet) by computer-aided design (CAD) and computer-aided manufacturing (CAM), milling, and/or 3D-printing, but not limited thereto.

Fig. 6 conceptually illustrates a cross-section of a retainer according to an embodiment of the present invention and a tooth being contact with the retainer. Referring to Figs. 3 to 6, the retainer 100 may come into contact with a tooth (e.g., the first tooth 210) through an adhesive 300. According to an embodiment, the adhesive 300 may be a resin, but not limited thereto.

As described above, since a portion of the retainer 100 which comes into contact with the tooth is the contact portion 110, the retainer 100 illustrated in Fig. 6 may represent the contact portion 110.

For example, when the first contact portion 110-1 (or the second contact portion 110-3) is attached to the first tooth 210 (or the second tooth 230), only one of edges constituting the first contact portion 110-1 comes into contact with the first tooth 210, and remaining edges do not come into contact with the first tooth 210. For example, of surfaces (a bottom surface, a top surface, and side surfaces) constituting the first contact portion 110-1, there is no surface coming into contact with a surface of the first tooth 210.

That is, the teeth (e.g., the teeth 210 and 230) and the contact portion 110 may come into contact with each other in a line contact manner rather than a surface contact manner. Accordingly, chemical and mechanical adhesive force between the contact portion 110, the teeth, and the adhesive 300 is enhanced such that the bonding between the retainer 100 and the teeth can be improved.

As a result, although the retainer 100 according to an embodiment of the present invention includes the spaced portion 113 being spaced apart from the teeth, the retainer 100 can maintain the teeth alignment.

In other words, since the retainer 100 according to an embodiment of the present invention includes the spaced portion 113 being spaced apart from the teeth and coming into contact with the teeth in a line contact manner, it is possible to secure the hygienic space between the retainer 100 (or the spaced portion 130) and the teeth 210 and 230 intentionally such that the retainer 100 can improve a dental hygiene condition of the wearer of the retainer 100 and maintain the teeth alignment of the wearer.

For the sake of the explanation, it has been described with reference to FIGS. 3 to 6 on the assumption that the retainer 100 is formed in the form of a metal wire having a quadrangular cross section. However, the embodiment of the present invention does not limit a shape of a cross section of the retainer 100. It is obvious that the description herein may be applied to all of retainers 100 having various shapes of cross sections. For example, even when the retainer 100 has a circular cross section, a portion where the teeth (e.g., the teeth 210 and 230) and the contact portion 110 are in contact with each other may be a line segment because a circle may meet a line segment at one point.

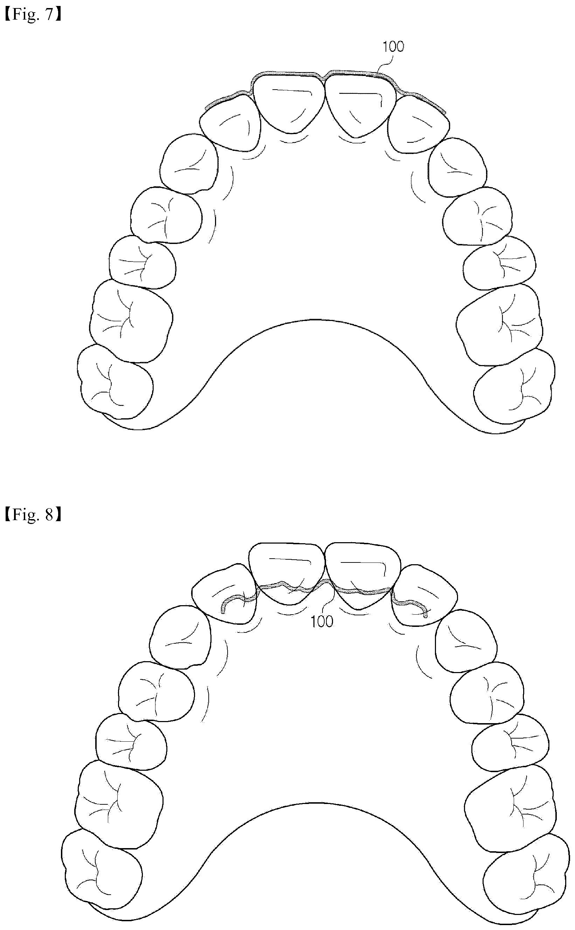

Figs. 7 to 10 conceptually illustrate a retainer according to an embodiment of the present invention.

For example, as illustrated in Fig. 7, the retainer 100 may be attached to labial surfaces of four teeth. In this case, the retainer 100 may include four contact portions and three spaced portions.

For example, as illustrated in Fig. 8, the retainer 100 may be attached to lingual surfaces of four teeth. In this case, the retainer 100 may include four contact portions and three spaced portions.

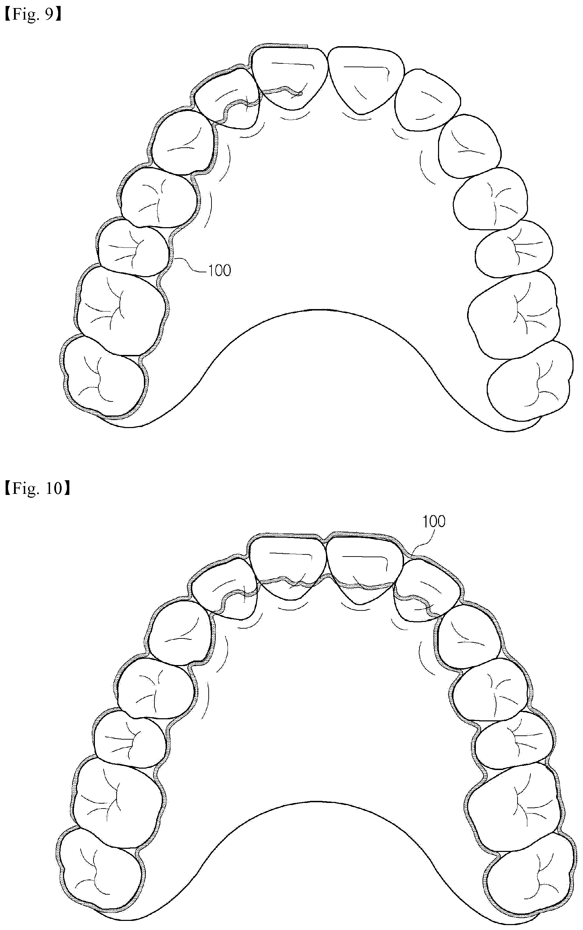

For example, as illustrated in Fig. 9, the retainer 100 may be attached to both labial surfaces and lingual surfaces of seven teeth, and may wrap the outermost tooth. In this case, the retainer 100 may include 13 contact portions and 12 spaced portions.

For example, as illustrated in Fig. 10, the retainer 100 may be attached to the entire teeth and surround the entire teeth along labial surfaces and lingual surfaces of the entire teeth.

The number of spaced portions and contact portions described with reference to Figs. 7 to 10 is merely an example, and the number thereof may vary according to the manner of attachment.

As described in Figs. 7 to 10, the retainer 100 may be attached to at least two teeth, and may be attached to at least one of labial surfaces and lingual surfaces of the at least two teeth. In other words, FIGS. 3 and 4 illustrate that the retainer 100 includes two contact portions and one spaced portion for the sake of the explanation, but the structure and function of the retainer 100 according to an embodiment of the present invention are not limited thereto.

Although embodiments of the present invention has been described for illustrative purposes, those skilled in the art will appreciate that various modifications, additions, and substitutions are possible, without departing from the scope and spirit of the invention as disclosed in the accompanying claims.

### Industrial Applicability

The present invention relates to a retainer and, more particularly, to a retainer for maintaining teeth alignment of a wearer.

## Claims

1. A retainer configured in a form of a metal wire and maintaining an alignment of a first tooth and a second tooth adjacent to the first tooth, the retainer comprising:
a first contact portion coming into contact with at least a part of a surface of the first tooth;
a second contact portion coming into contact with at least a part of a surface of the second tooth; and
a spaced portion extending from the first contact portion and the second contact portion, being located between the first contact portion and the second contact portion, and being spaced from the first tooth and the second tooth,
wherein the spaced portion is located between an embrasure configured between the first tooth and the second tooth and an interdental space existing between the first tooth and the second tooth, and
at least one edge of the spaced portion is a parabola having a small curvature.

2. The retainer of claim 1, wherein a shape of the spaced portion is based on a dentition of a wearer wearing the retainer,
wherein the dentition of the wearer includes: at least one of a height of an occlusion between maxillary and mandibular teeth, a symmetry of the first tooth and the second tooth, each size of the first tooth and the second tooth, a size of a contact surface between the first tooth and the second tooth, a shape of the interdental space, and a shape of the embrasure.

3. The retainer of claim 2, wherein a contact edge is defined as an edge coming into contact with the first tooth and the second tooth among edges of the retainer,
wherein a length of a portion, which belongs to the spaced portion, of the contact edge is based on the dentition of the wearer.

4. The retainer of claim 2, wherein a contact edge is defined as an edge coming into contact with the first tooth and the second tooth among edges of the retainer,
wherein, of points on the contact edge, each position of two points at which the retainer starts to be spaced apart from the first tooth and the second tooth is based on the dentition of the wearer.

5. The retainer of claim 2, wherein a contact edge is defined as an edge coming into contact with the first tooth and the second tooth among edges of the retainer,
wherein, of at least one extrema of the contact edge, a first point is defined as a point on the first contact portion,
of points on the contact edge, a second point is defined as a point at which the retainer starts to be spaced apart from the first tooth, and
of points on a contact line between the first tooth and the second tooth, a closest point is defined as a point closest to the contact edge,
wherein a ratio between a distance between the first point and the second point and a distance between the second point and the closet point is based on the dentition of the wearer.

6. The retainer of claim 2, wherein a contact edge is defined as an edge coming into contact with the first tooth and the second tooth among edges of the retainer,
wherein, of points on a contact line between the first tooth and the second tooth, a contact point is defined as a point closest to the contact edge,
wherein a shortest distance between the spaced portion and the contact point is based on the dentition of the wearer.

7. The retainer of claim 6, wherein a length of the shortest distance is at least 0.05 mm.

8. The retainer of claim 2, wherein, when manufacturing the retainer, the shape of the spaced portion is intentionally designed by a designer depending on the dentition of the wearer.

9. The retainer of claim 1, wherein a space between the spaced portion, the embrasure, and the interdental space is intentionally designed for dental hygiene of the wearer of the retainer.

10. The retainer of claim 1, wherein the retainer has a polygonal or circular cross section.

11. The retainer of claim 10, wherein only one of edges of the retainer comes into contact with the first tooth and the second tooth.
